(19)

Europäisches
Patentamt
European
Patent Office
Office européen
des brevets

(11) **EP 1 598 105 B1**

(12) **EUROPEAN PATENT SPECIFICATION**

(45) Date of publication and mention
of the grant of the patent:
**02.12.2009 Bulletin 2009/49**

(21) Application number: **03815740.0**

(22) Date of filing: **25.09.2003**

(51) Int Cl.:
**B01D 63/04** (2006.01)      **B01D 53/22** (2006.01)
**B01D 61/08** (2006.01)      **B01D 61/02** (2006.01)
**B01D 63/02** (2006.01)      **C02F 1/44** (2006.01)
**B01D 65/00** (2006.01)

(86) International application number:
**PCT/JP2003/012195**

(87) International publication number:
**WO 2004/069391 (19.08.2004 Gazette 2004/34)**

(54) **HOLLOW FIBER MEMBRANE MODULE AND MODULE ARRANGEMENT GROUP THEREOF**

HOHLFASERMEMBRANMODUL UND MODULANORDNUNGSGRUPPE DAFÜR

MODULE A MEMBRANES DE FIBRES CREUSES ET AGENCEMENT DE TELS MODULES

(84) Designated Contracting States:
**AT BE BG CH CY CZ DE DK EE ES FI FR GB GR
HU IE IT LI LU MC NL PT RO SE SI SK TR**

(30) Priority: **03.02.2003 JP 2003025787**

(43) Date of publication of application:
**23.11.2005 Bulletin 2005/47**

(73) Proprietor: **Toyo Boseki Kabushiki Kaisha
Osaka-shi,
Osaka 530-8230 (JP)**

(72) Inventors:
• **KUMANO, Atsuo,
c/o Toyo Boseki K.K Iwakuni Membrane Plant
Yamaguchi 740-8567 (JP)**

• **MARUI, Katsushige,
c/o Toyo Boseki K.K Iwakuni Membrane Plant
Yamaguchi 740-8567 (JP)**
• **KOTERA, Hideto,
c/o Toyo Boseki K.K Iwakuni Membrane Plant
Yamaguchi 740-8567 (JP)**
• **FUJIWARA, Nobuya,
c/o Toyo Boseki K.K. Head Office
Kita-ku, Osaka-shi,
Osaka 530-8230 (JP)**

(74) Representative: **Vossius & Partner
Siebertstrasse 4
81675 München (DE)**

(56) References cited:
**EP-A1- 0 937 493      WO-A-03/086592
WO-A1-96/08306      JP-A- 54 102 201
JP-U- 06 029 604      JP-U- 60 010 645**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a hollow fiber membrane module comprising permselective hollow fiber membranes. The present invention relates to a hollow fiber membrane module comprising permselective hollow fiber membranes, the module being applicable for membrane separation treatments of fluids, such as, for example, the desalination of seawater, desalination of brine, purification of wastewater, production of sterile water, production of ultrapure water, and like reverse osmosis processes; advanced water purification treatment, removal of low-molecular-weight toxic substances such as agricultural chemicals, odorants and disinfection by-product precursors, water softening treatment by removal of hardness components, and like nanofiltration processes; recovery of paint from electrocoating wastewater, concentration and/or recovery of useful food-related materials, water purification treatment substituting for coagulation sedimentation and/or sand filtration, and like ultrafiltration processes; recovery of helium from natural gas, separation and/or recovery of hydrogen from the purge gas of ammonia plants, carbon dioxide separation in the tertiary recovery of petroleum, oxygen enrichment, nitrogen enrichment, and like gas separation processes; and other purposes; and an arrangement group of such hollow fiber membrane modules. In particular, the present invention relates to a gas separation membrane module for separating gas, a reverse osmosis hollow fiber membrane module useful for water treatment such as the desalination of seawater, and an arrangement group of such hollow fiber membrane modules.

BACKGROUND ART

Permselective membranes are divided into types according to the size of the substances to be separated. For example, membranes for treating liquids are classified roughly into ultrafiltration and microfiltration membranes for separating colloids, proteins and like substances; nanofiltration membranes for separating agricultural chemicals and like low-molecular-weight organic substances; and reverse osmosis membranes for separating ions. Reverse osmosis membranes are used at a pressure higher than the osmotic pressure of the liquid to be treated, and at a pressure of several MPa in the case of seawater desalination.

With respect to the shape, permselective membranes include flat sheet membranes, tubular membranes, spiral wound membranes and hollow fiber membranes, among which hollow fiber membranes are capable of having a large membrane area per unit volume of membrane module and are therefore suitable for membrane separation processes, thus finding wide application in, for example, the field of seawater desalination with reverse osmosis membranes. In practical use of such membrane modules, when the volume to be treated exceeds the treatment volume of one membrane module, a membrane module arrangement group is formed in which two or more membrane modules are arranged and connected to each other by piping.

Various studies have been made on the module structures according to the intended performance and conditions of use. For example, Japanese Unexamined Patent Publications No. 1981-87405 and No. 1985-37029 disclose hollow fiber membrane modules in which, in the case of reverse osmosis membranes, hollow fiber membranes are arranged in a crisscross fashion around a feedwater distribution pipe to maintain the spaces between the hollow fiber membranes. With such a structure, the feed liquid permeates evenly and makes it unlikely that turbidity in the feed liquid causes clogging between the hollow fibers, providing excellent so-called turbidity resistance, and flows evenly in a radial pattern without channeling, inhibiting concentration polarization.

In many widely used hollow fiber membrane modules, like those mentioned above, a feed fluid inlet and unpermeated fluid outlet, at which the fluid pressure is high, are located at the ends of the hollow fiber membrane module so as to face the direction parallel to the axial direction of the module.

Therefore, in the status quo, hollow fiber membrane module arrangement groups need to have a large number of high pressure pipes and headers of such pipes, and thus require high cost and a large space for piping. Especially in hollow fiber membrane modules for seawater desalination, since such modules are generally operated at a high pressure of 6 MPa or more, feed liquid pipes, concentrated liquid pipes and the headers of such pipes are designed to have high pressure resistance, increasing the piping space and cost of parts other than the hollow fiber membrane modules. Japanese Unexamined Patent Publication No. 1998-296058 discloses a hollow fiber membrane module structure in which an outlet for the concentrated water (nonpermeated fluid) is located on the outer peripheral side of the pressure vessel of the hollow fiber membrane module. However, the feed fluid inlet is provided at an end of the hollow fiber membrane module so as to face the direction parallel to the axial direction of the module, and thus this hollow fiber membrane module also requires headers of feed fluid pipes and concentrated fluid pipes, when forming a hollow fiber membrane arrangement group.

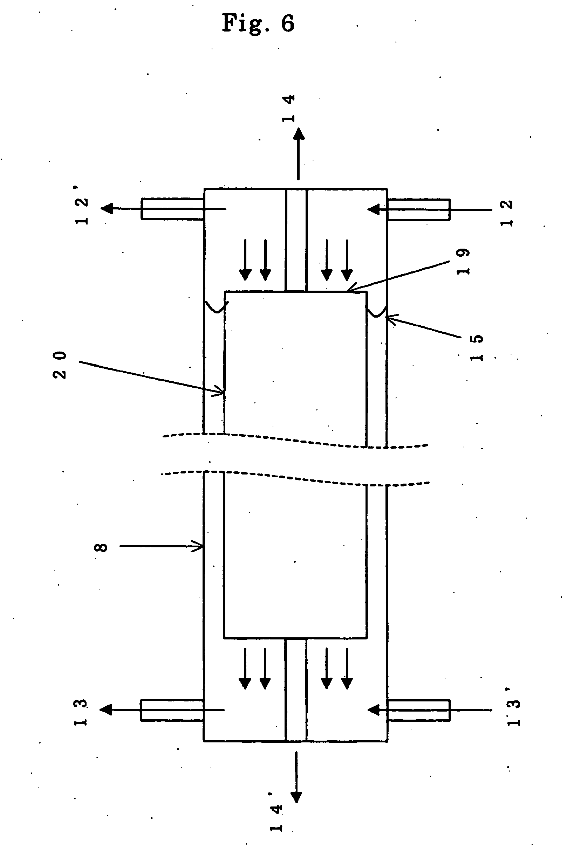

Disclosures about spiral wound reverse osmosis membrane modules are made in CodeLine Product Bulletin 507054 Rev. C "CodeLine Multi-ported Membrane Housings Your Path to Reducing System Cost by Eliminating Traditional Manifolds". In many of the cases disclosed in this document, like in the above-mentioned hollow fiber membrane modules, a feed liquid inlet and concentrated liquid outlet are provided at the ends of a membrane module so as to face the direction parallel to the axial direction of the module. This document also discloses a structure of a spiral wound reverse osmosis membrane module arrangement group in which a feed liquid inlet and concentrated liquid outlet are located on the side of a pressure vessel and connected to another feed liquid inlet and another concentrated liquid outlet, respectively, to eliminate the need for header pipes. Fig. 6 is a schematic diagram created based on the disclosed figures, the diagram showing the liquid flow in a known spiral wound membrane module that has a feedwater inlet and concentrated water outlet on the side of a pressure vessel. The feedwater is supplied from the side of the pressure vessel and fed to spiral wound reverse osmosis membrane elements from the feedwater inflow end of the membrane elements, which are disposed in series with respect to the feed liquid. Generally, six spiral wound reverse osmosis membrane elements are installed, and in such a case, the pressure drop of the module is large, making it difficult to effectively use the supply pressure.

In contrast to spiral wound reverse osmosis membrane modules, hollow fiber reverse osmosis membrane modules allow the membrane elements to be disposed in parallel, making it possible to reduce the pressure drop of the reverse osmosis membrane module and to collect permeated liquids from individual elements. This enables membrane element control by concentration measurement. Further, while only membrane elements with a diameter of up to 20.3 cm (8 inches) are used in practice in spiral wound reverse osmosis membrane modules, large-sized membrane elements with a diameter of 25.4 cm (10 inches) can be used in hollow fiber reverse osmosis membrane modules. This enables a higher treatment flow rate, and since pipes with a larger diameter can be used, greater effects can be achieved in reducing the piping length.

For example, the specification of U.S. Pat. No. 4,781,830 (Japanese Unexamined Patent Publication No. 1990-21919) discloses a membrane module comprising spiral wound membrane elements and an apparatus comprising the module, but it is difficult to arrange spiral wound membrane modules as disclosed therein in parallel.

The specification of U.S. Pat. No. 4,016,078 discloses an example of an arrangement group of two or more tubular membrane modules connected by joining blocks provided at the ends of the modules, not by piping. In this case, the blocks are joined via a gasket. Thus, the contact area of the joining is large, and sealing is insufficient to withstand such high pressures as applied to reverse osmosis membranes, making a great number of fixing members necessary for the connection. Further, the tubular membranes are used by an internal pressure system, which is difficult to apply to membranes for use at high pressure, such as reverse osmosis membranes. Finally, the international publication WO96/08306 shows a cartridge having a plurality of hollow fiber membranes, arranged so as to operate in series or in parallel.

## DISCLOSURE OF THE INVENTION

An object of the present invention is to provide a hollow fiber membrane module with a low pressure drop, in which permeated water can be collected from individual hollow fiber membrane elements; and a hollow fiber membrane module arrangement group in which two or more hollow fiber membrane modules are connected to each other using short lengths of feed fluid pipes and concentrated fluid pipes, and in which header pipes at the supply side and concentration side are substantially unnecessary.

The present inventors conducted extensive research to achieve the above object, and as a result, found that when a hollow fiber membrane module comprising at least two hollow fiber membrane elements has such a structure that a feed fluid distributor pipe is disposed at a center portion of each hollow fiber membrane element and feed fluid passage nozzles and concentrated fluid passage nozzles are located on the outer peripheral side of a hollow fiber membrane module pressure vessel, the hollow fiber membrane module and an arrangement group of such hollow fiber membrane modules can achieve the object, thus arriving at the present invention.

The present invention provides the following.

(1) A hollow fiber membrane module comprising a hollow fiber membrane submodule that comprises a hollow fiber membrane element or elements each having a feed fluid distribution pipe; the hollow fiber membrane element or elements having a permeated fluid collector at each end; the submodule being installed in a pressure vessel;

(a) the pressure vessel having a permeated fluid outlet at each end;
(b) the pressure vessel having at least two feed fluid passage nozzles on the outer peripheral side in the vicinity of one end;
(c) the feed fluid passage nozzles communicating with the feed fluid distribution pipe; and
(d) the pressure vessel having at least two concentrated fluid passage nozzles on the outer peripheral side in the vicinity of the other end.

(2) A hollow fiber membrane module according to item (1), wherein, in the hollow fiber membrane element or elements each having a feed fluid distribution pipe, permselective hollow fiber membranes are disposed around the feed fluid distribution pipe, and hollows of the hollow fiber membranes are opened by adhering and fixing with a resin, and then cutting, both end portions of the hollow fiber membranes.

(3) A hollow fiber membrane module according to item (1) or (2), further comprising an internal pipe inside the feed fluid distribution pipe.

(4) A hollow fiber membrane module according to any one of items (1) to (3), wherein hollow fiber membranes are arranged in a crisscross fashion around the feed fluid distribution pipe.

(5) A hollow fiber membrane module according to any one of items (1) to (4), comprising at Least two hollow fiber membrane elements in the pressure vessel.

(6) A hollow fiber membrane module according to item (5), wherein the at least two hollow fiber membrane elements are arranged in parallel so that a feed fluid is supplied in parallel to the elements.

(7) A hollow fiber membrane module according to item (5), wherein the at least two hollow fiber membrane elements are arranged in series so that a feed fluid is supplied in series to the elements.

(8) A hollow fiber membrane module according to any one of items (1) to (7), wherein the hollow fiber membranes are reverse osmosis membranes.

(9) A hollow fiber membrane module according to any one of items (1) to (8), wherein the hollow fiber membranes are gas separation membranes.

(10) A hollow fiber membrane module arrangement group comprising two or more hollow fiber membrane modules according to any one of items (1) to (9), one of the feed fluid passage nozzles of the pressure vessel of a hollow fiber membrane module communicating with a feed fluid passage nozzle of another hollow fiber membrane module disposed upstream with respect to the feed fluid; another feed fluid passage nozzle of the pressure vessel of the hollow fiber membrane module communicating with a feed fluid passage nozzle of another hollow fiber membrane module disposed downstream with respect to the feed fluid; one of the concentrated fluid passage nozzles of the pressure vessel of the hollow fiber membrane module communicating with a concentrated liquid passage nozzle of another hollow fiber membrane module disposed upstream with respect to the concentrated fluid; and another concentrated fluid passage nozzle of the pressure vessel of the hollow fiber membrane module communicating with a concentrated fluid passage nozzle of another hollow fiber membrane module disposed downstream with respect to the concentrated fluid.

Embodiments of the present invention are described below, but are not intended to limit the scope of the invention.

In the present invention, the feed fluid distribution pipe is a tubular member that distributes a fluid supplied from a feed fluid inlet into a hollow fiber assembly. A preferable example of such a pipe is a perforated pipe. Use of the feed fluid distribution pipe enables uniform distribution of the feed fluid through the hollow fiber assembly. This effect is particularly remarkable when the hollow fiber membrane element is long or the hollow fiber membrane assembly has a large outer diameter. It is preferable in the present invention that the feed fluid distribution pipe be positioned in a center portion of the hollow fiber membrane assembly. When the diameter of the feed fluid distribution pipe is too large with respect to the diameter of the hollow fiber membrane element, the proportion of hollow fiber membranes in the hollow fiber membrane module decreases, and as a result, the volume efficiency may be lowered because the membrane area of the module decreases or the module needs to be large in size in order to increase the membrane area. Accordingly, the cross-sectional area of the feed fluid distribution pipe is, for example, preferably 15% or less, and more preferably 10% or less, of the cross-sectional area of the hollow fiber membrane element. When the diameter of the feed fluid distribution pipe is too small, the pressure drop that occurs when the feed fluid flows inside the feed fluid distribution pipe increases, and as a result, the effective differential pressure applied to the hollow fiber membranes decreases and the separation efficiency may be lowered. Further, a feed fluid distribution pipe with too small a diameter may be damaged by the tension of the hollow fiber membranes received when the feed fluid flows through the hollow fiber membrane layers. Thus, although it depends on the material, strength, length and other factors of the feed fluid distribution pipe, for example when using an FRP pipe with a length of 1 to 2 m, the cross-sectional area of the feed fluid distribution pipe is preferably 1% or more, and more preferably 2% or more of the cross-sectional area of the hollow fiber membrane element. It is preferable to determine the optimum diameter by collectively considering the influences of the viscosity, flow rate, etc., of the fluid to be treated.

In the present invention, both end portions of the hollow fiber membrane assembly are separately fixed with a resin, and the hollows of the hollow fiber membranes are opened at both ends of the assembly. This means that both end portions of the hollow fiber membrane assembly are separately sealed and fixed by, for example, potting with an adhesive resin, so that the feed fluid does not leak from gaps between the hollow fiber membranes, or gaps between the hollow fiber membranes and resin. The adhesive resin to be used can be selected from epoxy resins, urethane resins, silicon resins, etc., according to the characteristics of the fluid to be treated and conditions of use. The end portions fixed with an adhesive are cut or otherwise processed so that the hollows of the hollow fiber membranes are opened, thus yielding a hollow fiber membrane element. A permeated fluid collector is provided at each of the hollow fiber membrane open ends of the hollow fiber membrane element, to produce a hollow fiber membrane submodule. One or more hollow fiber membrane submodules are installed in a pressure vessel having a feed fluid inlet, a concentrated fluid outlet and permeated fluid take-out ports, to produce a hollow fiber membrane module.

The pressure vessel for use in the present invention can accommodate hollow fiber membrane submodule(s), can apply an effective differential pressure to the hollow fiber membranes, and can perform a separation operation using the hollow fiber membranes.

In the present invention, the feed fluid passage nozzles are used in a hollow fiber membrane module arrangement group to supply the feed fluid to a hollow fiber membrane module, and to supply part of the feed fluid to another hollow fiber membrane module. Such nozzles are divided into two applications depending on the flow direction. The feed fluid passage nozzles are located on the outer peripheral side of the pressure vessel in the vicinity of one end of the vessel, and are preferably located outside the resin portion of the hollow fiber membrane element in order to supply the feed fluid to the feed fluid distribution pipe. When providing two or more feed fluid passage nozzles on the outer peripheral side of the pressure vessel in the vicinity of one end thereof, the nozzles are preferably in symmetrical positions to facilitate connection with other hollow fiber membrane modules. In the case of the hollow fiber membrane module disposed furthest downstream with respect to the feed fluid in a hollow fiber membrane module arrangement group, or in the case of a hollow fiber membrane module used singly, only one feed fluid passage nozzle can be used as a feed fluid inlet, with the other(s) being sealed.

In the present invention, the concentrated fluid passage nozzles are used in a hollow fiber membrane module arrangement group to feed the concentrated fluid to a downstream hollow fiber membrane module and to receive the concentrated fluid from an upstream hollow fiber membrane module. Such nozzles are divided roughly into two applications, according to the flow direction. The concentrated fluid passage nozzles are located on the outer peripheral side of the pressure vessel in the vicinity of one end of the vessel, and are preferably located outside the resin portion of the hollow fiber membrane element in order to efficiently discharge the concentrated fluid. It is preferable that the nozzles are provided at two symmetrical positions, to facilitate connection with other hollow fiber membrane modules. In the case of the hollow fiber membrane module disposed furthest upstream with respect to the concentrated fluid in a hollow fiber membrane module arrangement group, or in the case of a hollow fiber membrane module used singly, only one concentrated fluid passage nozzle can be used as a concentrated fluid discharge port, with the other(s) being sealed.

The permeated fluid outlets in the present invention are outlets from which the permeated fluid obtained by the treatment in the hollow fiber membrane module is taken out. The permeated fluid outlets are not limited in position, shape and other factors, and are preferably provided in the vicinity of the centers of the ends of the module in the direction perpendicular to the end faces, to facilitate attachment and detachment of the end plates of the pressure vessel.

The internal pipe in the present invention is a pipe within which the permeated fluid flows. The internal pipe communicates with the gaps between the hollow fiber membrane open ends of the hollow fiber membrane element and permeated fluid collectors. By providing such an internal pipe, the permeated fluid obtained at one end of the hollow fiber membranes, and the permeated fluid obtained at the other end can be combined and taken out at the same time from one permeated fluid outlet. The internal pipe is preferably located inside the feed fluid distribution pipe, from the viewpoint of compactness, ease of fabrication, operability and performance. In this case, the feed fluid flows through the space formed between the inner wall of the feed fluid distribution pipe and the outer wall of the internal pipe, and the permeated fluid flows inside the internal pipe. Thus, such an embodiment is preferable from the viewpoint of maintenance convenience and volume efficiency.

The internal pipe, when disposed outside the feed fluid distribution pipe, is positioned between the feed fluid distribution pipe and the outermost portion of the hollow fiber membrane assembly, and thus the amount of the hollow fiber membranes in the hollow fiber membrane assembly is reduced and the treatment amount may decrease. When the internal pipe has a small diameter, the pressure drop caused when the permeated fluid flows becomes large, and the amount of the permeated fluid may decrease.

When providing the internal pipe inside the feed fluid distribution pipe, it is preferable that the outer diameter of the internal pipe be sufficiently smaller than the inner diameter of the feed fluid distribution pipe. Too large an external shape of the internal pipe reduces the space formed between the inner wall of the feed fluid distribution pipe and the outer wall of the internal pipe, resulting in a large pressure drop in the feed fluid. In contrast, too small an external shape increases the pressure drop caused when the permeated fluid flows, i.e., decreases the effective differential pressure acting on the membranes, and may cause reduction in permeability and/or separation efficiency. As for a preferable diameter for the internal pipe, for example, in the case of using hollow fiber reverse osmosis membranes, the proportion of the external cross-sectional area of the internal pipe is 5% to 30%, and more preferably 7% from 20% of the internal cross-sectional area of the feed fluid distribution pipe. The inner diameter of the internal pipe is preferably determined based on the pressure drop caused when the permeated fluid flows and the differential pressure between the feed fluid and permeated fluid. For example, when using reverse osmosis membranes for seawater desalination and an internal pipe made of FRP, the proportion of the internal cross-sectional area of the internal pipe is 20% to 80%, and more preferably 30% from 60% of the external cross-sectional area thereof.

In the present invention, the feed fluid passage nozzles communicate with the feed fluid distribution pipe. This means that the nozzles and pipe have a common space while maintaining a state without fluid transfer or exchange with the outside using flow path members or sealing members such as O rings, V-packings, etc. The openings of the hollow fiber membranes communicate with the permeated fluid outlets. The portions around the outer peripheries of the hollow fiber membranes communicate with the concentrated fluid passage nozzles.

The fluid to be treated is fed from a feed fluid passage nozzle, passes through the feed fluid distribution pipe, and is supplied through the holes formed in the side of the feed fluid distribution pipe into the gaps in the hollow fiber membrane assembly. Part of the feed fluid passes from the outside of the hollow fiber membranes to the inside. The fluid that has passed through the hollow fiber membranes (the permeated fluid) flows through the hollow fiber membrane openings at the ends of the element and is taken out from the permeated fluid outlets. Part of the feed fluid, which has not passed through the hollow fiber membranes, flows through the space between the outside of the hollow fiber membrane assembly and the module, and is taken out from a concentrated fluid passage nozzle.

When the feed fluid passage nozzles are located on the outer peripheral side of the pressure vessel in the vicinity of an end thereof, it is preferable to devise a structure that enables efficient introduction of the feed fluid to the feed fluid distribution pipe, such as the installation of a connector for that purpose. This is especially preferable when the internal pipe is disposed inside the feed fluid distribution pipe. Further, it is preferable to avoid an excessive pressure drop when the feed fluid passes through the connector, to effectively use the effective differential pressure at the time of membrane treatment. In order to efficiently introduce the feed fluid to the feed fluid distribution pipe, it is preferable to provide a means to prevent the feed fluid from entering the concentrated fluid flow path, i.e., the space between the outer periphery of the hollow fiber membrane element and the inner surface of the pressure vessel. Preferable examples of preventing means are packings, such as O-rings, V-packings, U-packings, X-packings or like means, provided between the outer periphery of the hollow fiber membrane element and the inner surface of the pressure vessel. Such packings are not intended to seal the permeated fluid passage from the feed fluid passage, nor to seal the permeated fluid passage from the concentrated fluid passage, but to seal the feed fluid from the concentrated fluid. Thus, packings for relatively small differential pressure are preferable, including V-packings, U-packings and X-packings, from the viewpoint of handling ease. The material of the sealing member is suitably selected according to the fluid to be treated, and, for example, for seawater desalination, rubbers are preferable from the viewpoint of corrosion resistance and usability at normal temperature. Examples of usable rubbers include nitrile rubbers, ethylene-propylene rubbers, silicone rubbers, styrene-butadiene rubbers, acrylic rubbers, fluororubbers, fluorosilicone rubbers, etc. Nitrile rubbers, ethylene-propylene rubbers and silicone rubbers are more preferable from the viewpoint of handling ease.

The concentrated fluid in the present invention is a fluid that has only moved through the gaps in the hollow fiber membrane assembly and has not penetrated the hollow fiber membranes. The fluid has concentrated unpermeated components, such as salt in the case of seawater desalination.

Examples of permselective hollow fiber membranes for use in the present invention include gas separation membranes, microfiltration membranes, nanofiltration membranes, reverse osmosis membranes, etc. In particular, the present invention can be effectively applied to a reverse osmosis hollow fiber membrane module for seawater desalination or like purposes.

Reverse osmosis membranes usable in the present invention are separation membranes capable of separating substances with a molecular weight of several tens of daltons, and specifically, those capable of removing at least 90% of the salt at an operation pressure of 0.5 MPa or more. When hollow fiber reverse osmosis membranes are used for seawater desalination, they preferably have a structure that makes it unlikely to cause clogging with turbidity components, since seawater, the fluid to be treated, contains a large proportion of turbidity components. Therefore, the present invention advantageously achieves its effects when applied to seawater desalination.

In the present invention, a hollow fiber membrane assembly comprising permselective hollow fiber membranes arranged in a crisscross fashion around the feed fluid distribution pipe, means an assembly in which hollow fiber membranes are arranged to cross each other with a winding angle with respect to the axial direction of the feed fluid distribution pipe. For example, such an assembly can be produced by rotating the feed fluid distribution pipe to wind a hollow fiber membrane or a bundle of two or more hollow fiber membranes while causing the membrane or bundle to traverse in the axial direction of the feed fluid distribution pipe. The hollow fiber membranes, when arranged in a crisscross fashion, are in point-contact with each other and thus have spaces therebetween, making it easy for the feed fluid to be distributed evenly through the whole hollow fiber membrane assembly. Therefore, such an arrangement suppresses the pressure drop caused when the feed fluid passes between the hollow fiber membranes, and thus inhibits drifting in the hollow fiber membrane layers. Further, the adsorption and/or deposition of turbidity components in the feed fluid on the hollow fiber membrane surfaces occurs evenly in the whole assembly, resulting in prolonged membrane life, i.e., reduction in the frequency of exchanging the hollow fiber membrane element, and other cost-cutting effects.

In a preferable embodiment of the present invention, two or more hollow fiber membrane elements are installed in one pressure vessel. This reduces the pressure vessel cost per hollow fiber membrane element, and also reduces the piping for connecting hollow fiber membrane modules, thereby decreasing the space per hollow fiber membrane element.

When the operation is performed under such conditions as to set the recovery rate, i.e., the proportion of the permeated fluid flow rate to the feed fluid flow rate, low, or when a small pressure drop in the hollow fiber membrane module is desired, it is preferable to connect two or more hollow fiber membrane elements in parallel. Parallel connection means that the feed fluid is supplied in parallel to the respective hollow fiber membrane elements. The compositions and concentrations of the feed fluids supplied to the respective elements are basically the same. This evenly distributes the load to the hollow fiber membrane elements, avoiding a concentration of the load on a specific hollow fiber membrane element. Further, since the feed fluid flow rate to each hollow fiber membrane element can be reduced, the pressure drop in the hollow fiber membrane module becomes small, making it possible to obtain an effective differential pressure. Furthermore, since the permeated fluid can be collected from each hollow fiber membrane element, the performance of the hollow fiber membrane elements can be easily controlled even during operation, by measuring the concentration of the permeated fluid.

In contrast, when the recovery rate is set high or when it is desired to vary the concentrations of the permeated fluids from the respective hollow fiber membrane elements, it is preferable to connect two or more hollow fiber membrane elements in series. Series connection means that, in one pressure vessel, the feed fluid is supplied to the supply side of a hollow fiber membrane element, the concentration side thereof, the supply side of the downstream hollow fiber membrane element, and the concentration side thereof, in this order. Basically, the feed fluids supplied to the respective hollow fiber membrane elements are different from each other in composition and flow rate. The more downstream the hollow fiber membrane element, the higher the unpermeated component concentration (the concentration of components to be removed) in the feed fluid and the lower the feed fluid flow rate. Therefore, although it depends on the operating conditions, in particular, the recovery rate, of the hollow fiber membrane module, the hollow fiber membrane elements are generally different from each other in the flow rate and concentration of the permeated fluids obtained therefrom. The permeated fluid from a hollow fiber membrane element disposed at the concentration side is lower in flow rate and higher in the concentration of unpermeated components, i.e., components to be removed. Accordingly, the concentrations of the permeated fluids obtained from the respective hollow fiber membrane elements are different from one another, making total optimization possible by, for example, posttreatment of only the permeated fluid from a hollow fiber membrane element that yield a high-concentration permeated fluid. Further, in the case of series connection, a high flow rate of the feed fluid is supplied to the hollow fiber membrane elements, and thus, even when the recovery rate is high, the fluid flows over the surface of the hollow fiber membranes at a high speed, effectively inhibiting the concentration polarization and fouling component deposition on the membrane surfaces.

The hollow fiber membrane module arrangement group according to the present invention is a unit comprising two or more hollow fiber membrane modules of the present invention, in which the feed fluid passage nozzles of the hollow fiber membrane modules communicate with each other, and similarly, the concentrated fluid passage nozzles of the modules communicate with each other. In preferable embodiments, when forming a hollow fiber membrane module arrangement group, the pressure drop in the feed fluid distribution pipe of each hollow fiber membrane module is optimized to more evenly distribute the feed fluid to each module, or a suitable resisting member is provided as required at the concentrated fluid side to inhibit variation in pressure drops among the modules. The resisting member is not limited in shape, structure, size or material, as long as it causes a pressure drop when the concentrated fluid flows, and is compact, resistant to the pressure at which the hollow fiber membrane module is used, and stable against the concentrated fluid obtained from the feed fluid used. An additional member can be installed as a resisting member, or the passage in the existing members can be modified to achieve the resisting effect. The magnitude of the pressure drop caused by the resisting member is preferably 0.1 to 10 times, and more preferably 0.2 to 5 times, the pressure drop of the hollow fiber membrane module. An excessive pressure drop by the resisting member results in a case such that, for example, when collecting energy from the pressure possessed by the concentrated fluid, the collected energy may be small. An excessively small pressure drop by the resisting member may fail to achieve the intended effect.

It is preferable that the pressure drop caused by the end connectors be small. In particular, since the pressure drop by the supply-side end connector directly influences the effective differential pressure acting on the membranes, it is preferable to minimize this pressure drop. For that purpose, it is preferable to determine the structure and size of the passages of the feed fluid and concentrated fluid, considering the durability and pressure resistance required by the pressure used. Thus, preferably, the length of the passages is short and the cross-sectional area of the passages is large. For example, in the case of a reverse osmosis membrane module for seawater desalination, the length of the passages is preferably up to 10%, and more preferably up to 7%, of the length of the hollow fiber membrane element. The cross-sectional area of the passages is preferably at least 2%, and more preferably at least 4%, of the internal cross-sectional area of the feed fluid distribution pipe. It is preferable to devise a structure, such as a smooth wall structure, to avoid pressure drops by rapid expansion or contraction of the fluids.

BRIEF EXPLANATION OF THE DRAWINGS

Fig. 1    A simple structural diagram of an example of the hollow fiber membrane module of the present invention, in which two hollow fiber membrane elements are connected in parallel in a pressure vessel.

Fig. 2    A simple structural diagram of an example of the hollow fiber membrane module of the present invention, in which two hollow fiber membrane elements are connected in series in a pressure vessel.

Fig. 3    A structural diagram of an example of a hollow fiber membrane module arrangement group comprising hollow fiber membrane modules according to the present invention, the diagram showing only a portion comprising three modules.

Fig. 4    A structural schematic diagram of an example of an arrangement group of hollow fiber membrane modules according to the present invention, the arrangement group comprising six modules.

Fig. 5    A structural schematic diagram of an example of an arrangement group of known hollow fiber membrane modules, the arrangement group comprising six modules.

Fig. 6    A schematic diagram showing the liquid flow in an example of a known spiral wound membrane module having a feedwater inlet and concentrated water outlet on the side of a pressure vessel.

(Explanation of Letters and Numerals)

| | |
|---|---|
| 1, 1': | Hollow fiber membrane elements |
| 2, 2': | Hollow fiber membranes |
| 3, 3': | Feed fluid distribution pipes |
| 4a, 4b, 4a', 4b': | Resin |
| 5a, 5b, 5a', 5b': | Hollow fiber membrane openings |
| 6a, 6b, 6a', 6b': | Permeated fluid collectors |
| 7, 7': | Internal pipes |
| 8, 8': | Pressure vessel |
| 9, 9': | Feed fluid passage nozzles |
| 10, 10': | Concentrated fluid passage nozzles |
| 11, 11': | Permeated fluid outlets |
| 12: | Feed fluid |
| 12': | Downstream feed fluid |
| 13: | Concentrated fluid |
| 13': | Upstream concentrated fluid |
| 14, 14': | Permeated fluid |
| 15: | V-packing |
| 16: | Intermediate connector |
| 17: | Supply port |
| 18: | Supply-side end connector |
| 18': | Concentration-side end connector |
| 19: | Feedwater inflow end of spiral wound reverse osmosis membrane element |
| 20: | Spiral wound reverse osmosis membrane element |
| 101: | Hollow fiber membrane element |
| 102: | Hollow fiber membrane module |
| 103: | Feedwater pipe |
| 104: | Concentrated water pipe |
| 105: | Permeated water pipe |
| 106: | Permeated fluid |
| 107: | Feed fluid |
| 108: | Concentrated fluid |
| 109: | Permeated fluid header pipe |
| 110: | Feed fluid header pipe |
| 111: | Concentrated fluid header pipe |

BEST MODE FOR CARRYING OUT THE INVENTION

EXAMPLES

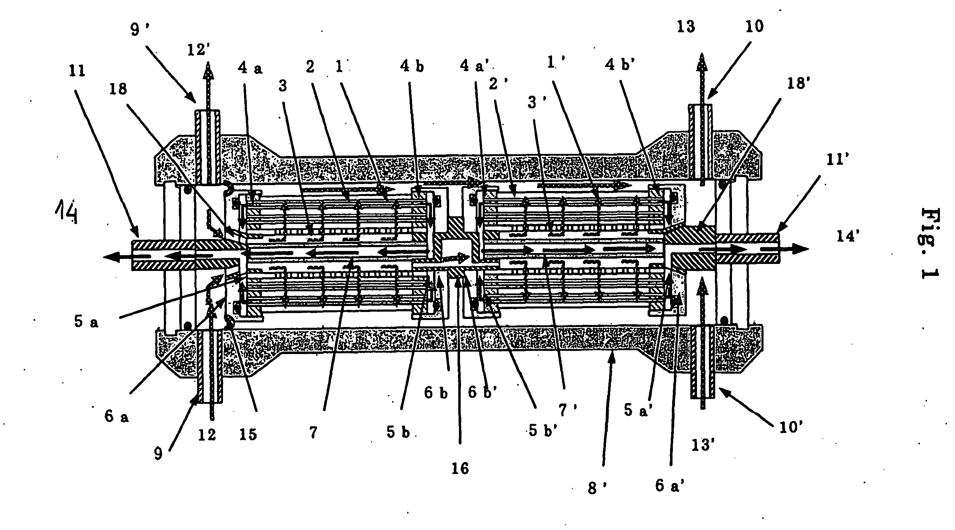

The following Examples are given to illustrate the present invention, and are not intended to limit the scope of the invention. The Examples show cases of reverse osmosis membranes for seawater desalination.
Embodiments of the present invention are described with reference to Fig. 1. Fig. 1 is a simple structural diagram of an example of the present invention, in which two hollow fiber membrane elements with both ends open are disposed in parallel in a pressure vessel having two feed fluid passage nozzles and two concentrated fluid passage nozzles.
A hollow fiber membrane element 1 according to an embodiment of the present invention comprises permselective hollow fiber membranes 2 disposed in a crisscross fashion around a feed fluid distribution pipe 3. Both end portions of the element are fixed with epoxy resin 4a, 4b and have hollow fiber membrane openings 5a, 5b. The hollow fiber membrane openings 5a, 5b are provided with permeated fluid collectors 6a, 6b, respectively, where the permeated fluid is collected. The permeated fluid at one end is caused to pass through an internal pipe 7 and is collected by the permeated fluid collector at the other end. This structure is referred to as a hollow fiber membrane submodule.
A feed fluid 12 enters from a feed fluid passage nozzle 9, and part of the feed fluid is supplied to the hollow fiber membrane element by the supply-side end connector 18. Subsequently, the feed fluid is fed to a hollow fiber membrane element 1' via a feed fluid distribution pipe 3 of the hollow fiber membrane element 1 and intermediate connector 16. The feed fluid, while passing through the feed fluid distribution pipe 3, is fed to the hollow fiber membranes 2 outwardly in the circumferential direction. Part of the fluid permeates the hollow fiber membranes 2, flows from the hollow fiber membrane openings 5a, 5b via the permeated fluid collectors 6a, 6b and internal pipe 7, and is taken out as a permeated fluid 14 from a permeated fluid outlet 11. A concentrated fluid, which has not penetrated the hollow fiber membranes 2, passes through the passage between the hollow fiber membrane element 1 and pressure vessel 8, and is taken out as a concentrated fluid 13 from a concentrated fluid passage nozzle 10. The concentrated fluid is sealed in with a V-packing 15, and thus is not mixed with the feed fluid.
The fluid flow and structure of the hollow fiber membrane element 1' are basically the same as those of the hollow fiber membrane element 1. The two hollow fiber membrane elements 1, 1' are connected to each other by the intermediate connector 16, and part of the feed fluid 12 is supplied to the hollow fiber membrane element 1, and the remainder is supplied to the hollow fiber membrane element 1' through the intermediate connector 16. The concentrated fluid from the hollow fiber membrane elements 1, 1' passes through the concentration-side end connector 18', and is taken out from a concentrated fluid passage nozzle 10. The permeated fluids from the hollow fiber membrane elements 1, 1' are taken out from permeated fluid outlets 11 and 11', respectively. Part of the feed fluid does not pass through the hollow fiber membrane elements, and exits from a feed fluid passage nozzle 9'. The concentrated fluid joins a concentrated fluid flowing in from another hollow fiber membrane module through a concentrated fluid passage nozzle 10'.
The hollow fiber membrane elements 1, 1' are accommodated in a cylindrical pressure vessel 8, which has feed fluid passage nozzles 9, 9', concentrated fluid passage nozzles 10, 10', and permeated fluid outlets 11, 11'. To distribute the feed fluid as evenly as possible to the hollow fiber membrane module arrangement group, the supply-side end connector 18 and concentration-side end connector 18' are so structured as not to cause a large pressure drop, or, in the hollow fiber membrane module of the present invention with a small pressure drop, a suitable resisting member is provided in the hollow fiber membrane module so that the pressure drop in the hollow fiber membrane module is excessively small as compared with the pressure drop in the feed fluid passage nozzles or concentrated fluid passage nozzles.

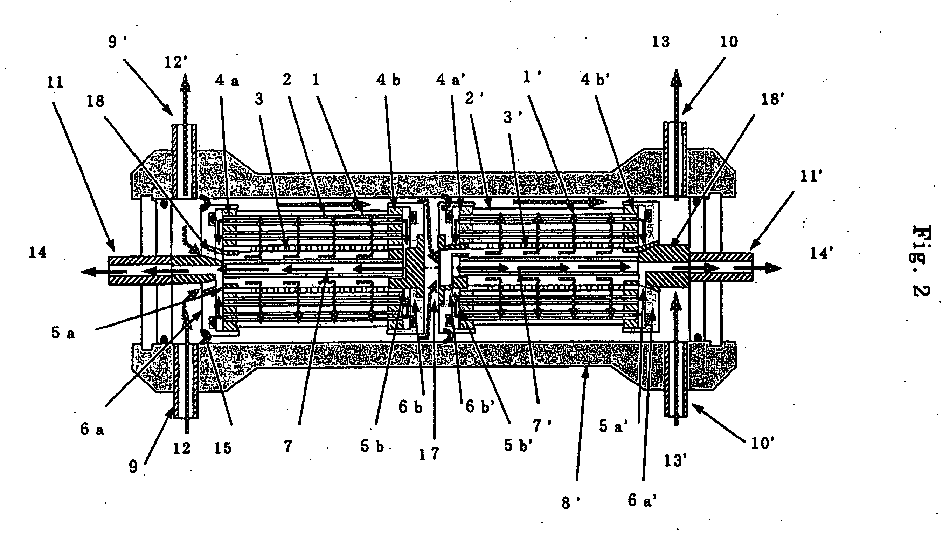

Fig. 2 shows a module that is similar to that of Fig. 1, except that two hollow fiber membrane elements are disposed in series. The fluid flows and structures of the hollow fiber membrane elements 1, 1' are basically the same as in Fig. 1, but the two hollow fiber membrane elements 1, 1' are not connected by an intermediate connector but sealed to the inner wall of the pressure vessel with V packings. All the feed fluid 12 is first supplied to the hollow fiber membrane element 1, and the concentrated fluid obtained therefrom is all supplied to the downstream hollow fiber membrane element 1' through a supply port 17. The concentrated fluid from the hollow fiber membrane element 1' is taken out from the concentrated fluid outlet 10. The permeated fluids from the hollow fiber membrane elements 1, 1' are taken out from permeated fluid outlet 11, 11', respectively.

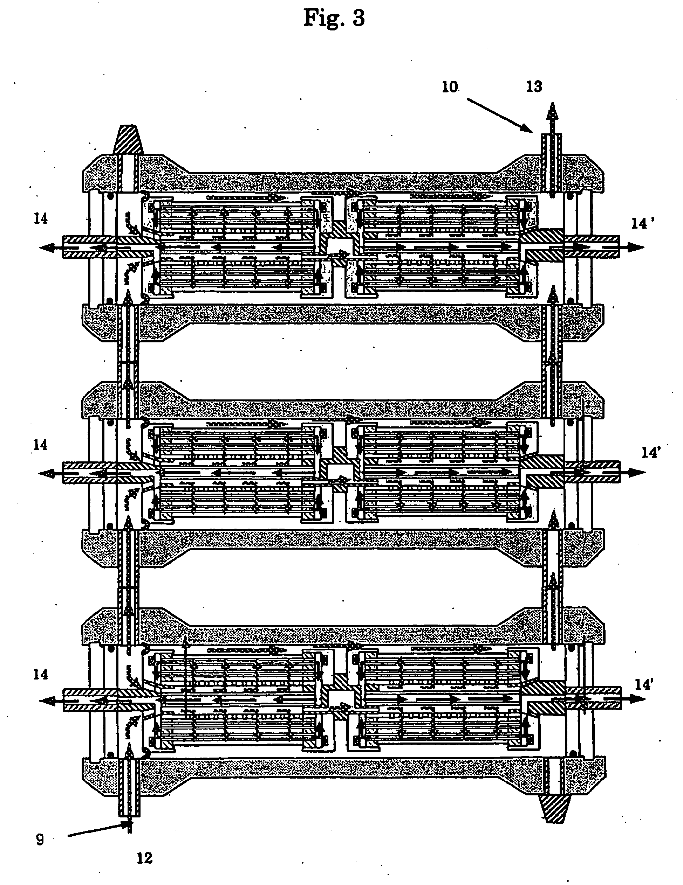

Fig. 3 shows the fluid flow in three hollow fiber membrane modules in an arrangement group formed from hollow fiber membrane modules according to the present invention as shown in Fig. 1. The fluid flow in each hollow fiber membrane module is the same as in Fig. 1. In the example shown in this figure, a feed fluid flows in from the feed fluid passage nozzle at a lower portion of each hollow fiber membrane module, and part of the feed fluid is supplied to a hollow fiber membrane element, and the remainder of the feed fluid is supplied from the feed fluid passage nozzle at an upper portion to the feed fluid passage nozzle at a lower portion of the downstream hollow fiber membrane module. A concentrated fluid flows in from the concentrated fluid passage nozzle at an upper portion of each hollow fiber membrane module, joins the concentrated fluid that has passed through the hollow fiber membrane elements, and flows from the concentrated fluid passage nozzle at a lower portion to the concentrated fluid passage nozzle at an upper portion of the downstream hollow fiber membrane module.

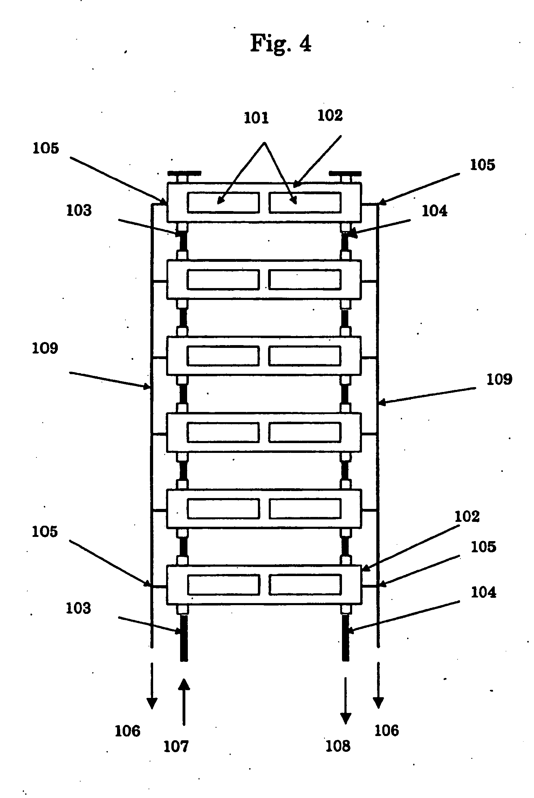

Fig. 4 shows an example of a hollow fiber membrane module arrangement group formed from six hollow fiber membrane modules of the present invention, in each of which two hollow fiber membrane elements are installed in parallel in a pressure vessel.

(Example 1)

(Production of hollow fiber membranes)

Forty parts by weight of cellulose triacetate (acetylation degree: 61.4) was mixed with a solution composed of 18 parts by weight of ethylene glycol and 42 parts by weight of N-methyl-2-pyrrolidone, and the mixture was heated to obtain a solution for forming membranes. The solution was degassed under reduced pressure, and then discharged from a nozzle to travel through the air into a coagulating liquid composed of 65 parts by weight of water at 14°C, 10.5 parts by weight of ethylene glycol and 24.5 parts by weight of N-methyl-2-pyrrolidone, to thereby form hollow fibers. Subsequently, the hollow fiber membranes were washed with water at normal temperature to remove excessive solvent and nonsolvent, and then treated with hot water. Thus, hollow fiber reverse osmosis membranes made of cellulose triacetate membranes were produced.

The obtained hollow fiber membranes had an outer diameter of 137 $\mu$m and an inner diameter of 53 $\mu$m. The desalination performance of the hollow fiber membranes with an effective length of about 1 m was measured. As a result, the amount of permeated water was 61 l/m$^2$/day, and the salt rejection rate was 99.8%. The measurement conditions were a supply pressure of 5.4 MPa, a temperature of 25°C, a salt concentration of 3.5 wt.%, and a recovery rate of 2% or less. The salt rejection rate is defined by the following equation.

$$\text{Rejection rate} = (1-(\text{solute concentration in permeated water}/\text{solute concentration in feedwater})) \times 100 \ (\%)$$

(Production of hollow fiber membrane element)

The hollow fiber membranes were disposed in a crisscross fashion around a feed fluid distribution pipe made of a perforated pipe, to form a hollow fiber membrane assembly. The outer diameter and inner diameter of this feed fluid distribution pipe were 72 mm and 65 mm, respectively. While rotating the feed fluid distribution pipe around its axis, a bundle of hollow fiber membranes was made in order to traverse to wind them around the feed fluid distribution pipe, thereby arranging the hollow fiber membranes in a crisscross fashion. The hollow fiber membranes in the outermost layer had an angle of about 47 degrees with respect to the axial direction. After potting and fixing the both end portions of the hollow fiber membrane assembly with an epoxy resin, both ends of the assembly were cut to open the hollows of the hollow fiber membranes, to produce a hollow fiber membrane element. Thereafter, an internal pipe was passed through the feed fluid distribution pipe, and the permeated fluid collectors located at both ends were fixed together with the end connectors, to produce a hollow fiber membrane submodule. The outer diameter and inner diameter of the inner pipe were 22 mm and 15 mm, respectively. The outer diameter of the hollow fiber membrane assembly in this hollow fiber membrane element was 260 mm, and the length in the axial direction of the hollow fiber membrane assembly, i.e., the length between the open ends in the axial direction was 1310 mm. The average length of the hollow fiber membranes was 1380 mm.

Two such hollow fiber membrane submodules were installed, together with an intermediate connector, in a pressure vessel, to thereby obtain a hollow fiber membrane module comprising two submodules arranged in parallel, as shown in Fig. 1. In order to prevent mixing of the feed fluid with the concentrated fluid, V packings were provided in the gaps between the hollow fiber membrane submodules and the internal wall surface of the pressure vessel. The V packings were 6.5 mm thick at the joint portion and 2 mm thick at the two divided portions. The passages for the feed fluid and concentrated fluid in the end connectors were each 60 mm long in the axial direction, and had cross sections with a width of 10 mm that were composed of gentle curves along the circumferences and that were provided with two slits in axial symmetry. The two slits had a cross-sectional area of 361 mm$^2$ each and 722 mm$^2$ in total, and a perimeter of 88 mm each and 176 mm in total. Reverse osmosis treatment was carried out at a supply pressure of 5.4 MPa, a temperature of 25°C, a feedwater salt concentration of 3.5 wt.%, and a recovery rate of 30%. As a result, the permeated water flow rate was 74 m$^3$/day, and the salt rejection was 99.5%. The module pressure drop calculated from the differential pressure between the feedwater pressure and concentrated water pressure in the module was 0.07 MPa. The average flow rate in the membrane module was 210 m³/day, and the pressure drop per 100 m³ per day was 0.033 MPa. The salt concentrations in the permeated water of the two hollow fiber membrane elements were measurable, and found to be 173 mg/L and 177 mg/L, respectively.

(Example 2)

A hollow fiber membrane module arrangement group as shown in Fig. 4 was formed from six hollow fiber membrane modules produced in the same manner as in Example 1. Feed fluid pipe portions and concentrated fluid pipe portions that were designed for use under high pressures were limited to the portions for connecting the hollow fiber membrane modules. Since high pressure-pipes were used only for the connecting portions, the lengths of such pipes were 0.5 m for the feed fluid, and 0.5 m for the concentrated fluid. Neither header pipes nor branch pipes were necessary.

(Comparative Example 1)

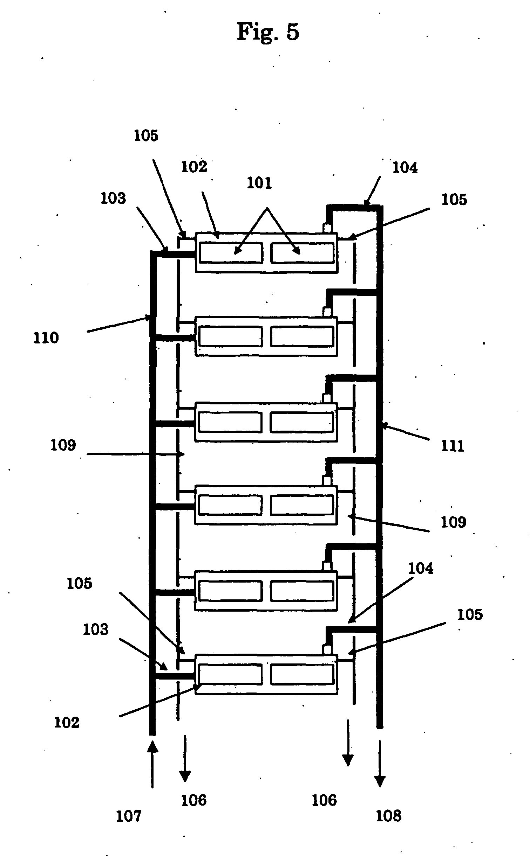

Using hollow fiber membranes produced in the same manner as in Example 1 and following the process disclosed in Japanese Unexamined Patent Publication No. 1998-296058, six modules were prepared with a feed fluid passage nozzle at an end face of a pressure vessel and a concentrated fluid passage nozzle on the outer peripheral side of the pressure vessel. Using these modules, a hollow fiber membrane module arrangement group as shown in Fig. 5 was formed. Each hollow fiber membrane module required feed fluid pipe portions and concentrated fluid portions that were designed for high-pressureuse, and header pipes for high-pressure use were formed from such portions. As a result, portions for high-pressure use were larger than those in Fig. 4 indicating Example 2. The lengths of the pipes for high pressureuse, including the headers, were 3.5 m at the supply side and 3 m at the concentration side, which were greater than in Example 2 by 3 m and 2.5 m, respectively.

(Comparative Example 2)

Using a spiral wound membrane module comprising six spiral wound membrane elements with a diameter of 20.3 cm (8 inches) arranged in series, reverse osmosis treatment was carried out under the same conditions as in Example 1. As a result, the permeated water flow rate was 72 m³/day, and the salt rejection rate was 99.5%. The module pressure drop calculated from the differential pressure between the feedwater pressure and concentrated water pressure in the module was 0.15 MPa. The average flow rate in the membrane module was 204 m³/day, and the pressure drop per 100 m³ per day was as large as 0.074 MPa, which was more than twice the pressure drop in Example 1. That is, the energy of the pressure drop , which did not act on the membranes, was more than twice that in Example 1.
Since the permeated water from each spiral wound membrane element could not be sampled, the permeated water quality was not measurable.

(Comparative Example 3)

Using the same hollow fiber membranes as prepared in Example 1, a hollow fiber membrane element was produced, which had the same outer diameter as that of Example 1 and was the same as that of Example 1 except that the outer and inner diameters of the feed fluid distribution pipe were 142 mm and 135mm, respectively. Thereafter, an internal pipe was passed through the feed fluid distribution pipe, and the permeated fluid collectors located at both ends were fixed together with end connectors, to produce a hollow fiber membrane submodule. The outer and inner diameters of the inner pipe were 125 mm and 40 mm, respectively. In this hollow fiber membrane element, the outer diameter of the hollow fiber membrane assembly was 260 mm, and the length in the axial direction of the hollow fiber membrane assembly, i.e., the length between the open ends in the axial direction, was 1310 mm. Two such hollow fiber membrane submodules were installed, together with an intermediate connector, in a pressure vessel, to thereby obtain a hollow fiber membrane module comprising two submodules arranged in parallel, like in Example 1. The passages for the feed fluid and concentrated fluid in the end connectors were the same as in Example 1. Reverse osmosis treatment was carried out under the same conditions as in Example 1. As a result, the permeated water flow rate was 55 m³/day, and salt rejection rate was 99.5%. The module pressure drop calculated from the differential pressure between the feedwater pressure and concentrated water pressure in the module was 0.12 MPa. The average flow rate in the membrane module was 156 m³/day, and the pressure drop per 100 m³ per day was 0.08 MPa. The salt concentrations in the permeated water of the two hollow fiber membrane elements were 183 mg/L and 167 mg/L, respectively.
The large outer diameter of the feed fluid distribution pipe resulted in a reduction in the number of hollow fiber membranes placed in the hollow fiber membrane elements, and the large outer diameter of the internal pipe narrows the passage formed with the inner surface of the feed fluid distribution pipe. Thus, the pressure drop was large and the permeation flow rate was small.

INDUSTRIAL APPLICABILITY

The present invention provides a hollow fiber membrane module comprising at least two hollow fiber membrane elements, in which the feed fluid can be supplied to a feed fluid distribution pipe at a central portion of each hollow fiber membrane element, so that the at least two hollow fiber membrane elements can be arranged in parallel with respect to the feed fluid, thereby reducing the pressure drop in the membrane module. When two hollow fiber membrane elements are used, the permeated water can be separately collected from each membrane element, facilitating the performance control of the individual membrane elements. Further, since the pressure vessel has at least two feed fluid passage nozzles on the outer peripheral side in the vicinity of one end, and has at least two concentrated fluid passage nozzles on the outer peripheral side in the vicinity of the other end, the hollow fiber membrane module makes it possible to form a hollow fiber membrane module arrangement group with a short length of high-pressure pipes, and can contribute greatly to the industry.

**Claims**

1.  A hollow fiber membrane module comprising a hollow fiber membrane submodule that comprises at least two hollow fiber membrane elements each having a feed fluid distribution pipe; the hollow fiber membrane elements having a permeated fluid collector at each end; the submodule being installed in a pressure vessel;

    (a) the pressure vessel having a permeated fluid outlet at each end;
    (b) the pressure vessel having at least two feed fluid passage nozzles on the outer peripheral side in the vicinity of one end;
    (c) the feed fluid passage nozzles communicating with the feed fluid distribution pipe;
    (d) the pressure vessel having at least two concentrated fluid passage nozzles on the outer peripheral side in the vicinity of the other end; and
    (e) an internal pipe inside the feed fluid distribution pipe;

    wherein hollow fiber membranes are arranged in a crisscross fashion around the feed fluid distribution pipe,
    wherein the at least two hollow fiber membrane elements are arranged in parallel so that a feed fluid is supplied in parallel to the elements,
    wherein the cross-sectional area of the feed fluid distribution pipe is 1% to 15% of the cross-sectional area of the hollow fiber membrane element, and wherein the external cross-sectional area of the internal pipe is 7% to 20% of the internal cross-sectional area of the feed fluid distribution pipe.

2.  A hollow fiber membrane module according to Claim 1, wherein, in the hollow fiber membrane element or elements each having a feed fluid distribution pipe, permselective hollow fiber membranes are disposed around the feed fluid distribution pipe, and hollows of the hollow fiber membranes are opened by adhering and fixing with a resin, and then cutting, both end portions of the hollow fiber membranes.

3.  A hollow fiber membrane module according to Claim 1 or 2, wherein the hollow fiber membranes are reverse osmosis membranes.

4.  A hollow fiber membrane module according to any one of Claims 1 to 3, wherein the hollow fiber membranes are gas separation membranes.

5.  A hollow fiber membrane module arrangement group comprising two or more hollow fiber membrane modules according to any one of Claims 1 to 4, one of the feed fluid passage nozzles of the pressure vessel of a hollow fiber membrane module communicating with a feed fluid passage nozzle of another hollow fiber membrane module disposed upstream with respect to the feed fluid; another feed fluid passage nozzle of the pressure vessel of the hollow fiber membrane module communicating with a feed fluid passage nozzle of another hollow fiber membrane module disposed downstream with respect to the feed fluid; one of the concentrated fluid passage nozzles of the pressure vessel of the hollow fiber membrane module communicating with a concentrated liquid passage nozzle of another hollow fiber membrane module disposed upstream with respect to the concentrated fluid; and another concentrated fluid passage nozzle of the pressure vessel of the hollow fiber membrane module communicating with a concentrated fluid passage nozzle of another hollow fiber membrane module disposed downstream with respect to the concentrated fluid.

**Patentansprüche**

1. Hohlfasermembran-Modul mit einem Hohlfasermembran-Teilmodul, das aufweist: mindestens zwei Hohlfasermembran-Elemente mit jeweils einem Einsatzfluid-Verteilungsrohr, wobei die Hohlfasermembran-Elemente einen permeierten Fluidkollektor an jedem Ende haben, wobei das Teilmodul in einem Druckgefäß eingebaut ist,

   (a) wobei das Druckgefäß einen permeierten Fluidauslaß an jedem Ende hat,
   (b) wobei das Druckgefäß mindestens zwei Einsatzfluid-Durchlaßdüsen auf der Außenumfangsseite in der Umgebung eines Endes hat,
   (c) wobei die Einsatzfluid-Durchlaßdüsen mit dem Einsatzfluid-Verteilungsrohr kommunizieren,
   (d) wobei das Druckgefäß mindestens zwei Konzentrationsfluid-Durchlaßdüsen auf der Außenumfangsseite in der Umgebung des anderen Endes hat, und
   (e) mit einem Innenrohr innerhalb des Einsatzfluid-Verteilungsrohrs,

   wobei Hohlfasermembranen um das Einsatzfluid-Verteilungsrohr kreuz und quer angeordnet sind, wobei die mindestens zwei Hohlfasermembran-Elemente parallel angeordnet sind, so daß ein Einsatzfluid parallel zu den Elementen zugeführt wird, wobei die Querschnittfläche des Einsatzfluid-Verteilungsrohrs 1 % bis 15 % der Querschnittfläche des Hohlfasermembran-Elements beträgt und wobei die Außenquerschnittfläche des Innenrohrs 7 % bis 20 % der Innenquerschnittfläche des Einsatzfluid-Verteilungsrohrs beträgt.

2. Hohlfasermembran-Modul nach Anspruch 1, wobei in dem (den) Hohlfasermembran-Element oder Elementen mit jeweils einem Einsatzfluid-Verteilungsrohr permselektive Hohlfasermembranen um das Einsatzfluid-Verteilungsrohr angeordnet sind und Hohlräume der Hohlfasermembranen geöffnet sind, indem beide Endabschnitte der Hohlfasermembranen mit einem Harz verklebt und fixiert und anschließend aufgeschnitten sind.

3. Hohlfasermembran-Modul nach Anspruch 1 oder 2, wobei die Hohlfasermembranen Umkehrosmosemembranen sind.

4. Hohlfasermembran-Modul nach einem der Ansprüche 1 bis 3, wobei die Hohlfasermembranen Gastrennungsmembranen sind.

5. Hohlfasermembran-Modulanordnungsgruppe mit zwei oder mehr Hohlfasermembran-Modulen nach einem der Ansprüche 1 bis 4, wobei eine der Einsatzfluid-Durchlaßdüsen des Druckgefäßes eines Hohlfasermembran-Moduls mit einer Einsatzfluid-Durchlaßdüse eines weiteren Hohlfasermembran-Moduls kommuniziert, das bezüglich des Einsatzfluids stromaufwärts angeordnet ist, eine weitere Einsatzfluid-Durchlaßdüse des Druckgefäßes des Hohlfasermembran-Moduls mit einer Einsatzfluid-Durchlaßdüse eines weiteren Hohlfasermembran-Moduls kommuniziert, das bezüglich des Einsatzfluids stromabwärts angeordnet ist, eine der Konzentrationsfluid-Durchlaßdüsen des Druckgefäßes des Hohlfasermembran-Moduls mit einer Konzentrationsflüssigkeits-Durchlaßdüse eines weiteren Hohlfasermembran-Moduls kommuniziert, das bezüglich des Konzentrationsfluids stromaufwärts angeordnet ist, und eine weitere Konzentrationsfluid-Durchlaßdüse des Druckgefäßes des Hohlfasermembran-Moduls mit einer Konzentrationsfluid-Durchlaßdüse eines weiteren Hohlfasermembran-Moduls kommuniziert, das bezüglich des Konzentrationsfluids stromabwärts angeordnet ist.

**Revendications**

1. Module de membrane à fibres creuses comprenant un sous-module de membrane à fibres creuses qui comprend au moins deux éléments de membrane à fibres creuses, chacun d'eux présentant un tuyau de distribution de fluide d'alimentation ; les éléments de membrane à fibres creuses présentant un collecteur de fluide imprégné à chaque extrémité ; le sous-module étant installé dans un récipient sous pression ;

   (a) le récipient sous pression présentant une sortie de fluide imprégné au niveau de chaque extrémité ;
   (b) le récipient sous pression présentant au moins deux buses de passage de fluide d'alimentation sur le côté périphérique extérieur à proximité d'une extrémité ;
   (c) les buses de passage de fluide d'alimentation communiquant avec le tuyau de distribution de fluide d'alimentation;
   (d) le récipient sous pression présentant au moins deux buses de passage de fluide concentré sur le côté périphérique extérieur à proximité de l'autre extrémité, et

(e) un tuyau intérieur situé à l'intérieur du tuyau de distribution de fluide d'alimentation;

dans lequel des membranes à fibres creuses sont disposées d'une façon entrecroisée autour du tuyau de distribution de fluide d'alimentation,

dans lequel les au moins deux éléments de membrane à fibres creuses sont disposés en parallèle de telle sorte qu'un fluide d'alimentation soit fourni en parallèle aux éléments, et

dans lequel la superficie en coupe transversale du tuyau de distribution de fluide d'alimentation est comprise entre 1 % et 15 % de la superficie en coupe transversale de l'élément de membrane à fibres creuses, et dans lequel la superficie en coupe transversale extérieure du tuyau intérieur est comprise entre 7 % et 20 % de la superficie en coupe transversale intérieure du tuyau de distribution de fluide d'alimentation.

2. Module de membrane à fibres creuses selon la revendication 1, dans lequel, dans l'élément ou les éléments de membrane à fibres creuses ayant chacun un tuyau de distribution de fluide d'alimentation, sont disposées des membranes à fibres creuses à perméabilité sélective autour du tuyau de distribution de fluide d'alimentation, et des cavités des membranes à fibres creuses sont ouvertes en collant et en fixant avec de la résine, et puis en coupant, les deux parties d'extrémité des membranes à fibres creuses.

3. Module de membrane à fibres creuses selon la revendication 1 ou la revendication 2, dans lequel les membranes à fibres creuses sont des membranes d'osmose inverse.

4. Module de membrane à fibres creuses selon l'une quelconque des revendications 1 à 3, dans lequel les membranes à fibres creuses sont des membranes de séparation de gaz.

5. Groupe d'agencement de modules de membranes à fibres creuses comprenant deux modules de membranes à fibres creuses ou plus, selon l'une quelconque des revendications 1 à 4, l'une des buses de passage de fluide d'alimentation du récipient sous pression d'un module de membrane à fibres creuses communiquant avec une buse de passage de fluide d'alimentation d'un autre module de membrane à fibres creuses disposé en amont par rapport au fluide d'alimentation; une autre buse de passage de fluide d'alimentation du récipient sous pression du module de membrane à fibres creuses communiquant avec une buse de passage de fluide d'alimentation d'un autre module de membrane à fibres creuses disposé en aval par rapport au fluide d'alimentation ; l'une des buses de passage de fluide concentré du récipient sous pression du module de membrane à fibres creuses communiquant avec une buse de passage de fluide concentré d'un autre module de membrane à fibres creuses disposé en amont par rapport au fluide concentré ; et une autre buse de passage de fluide concentré du récipient sous pression du module de membrane à fibres creuses communiquant avec une buse de passage de fluide concentré d'un autre module de membrane à fibres creuses disposé en aval par rapport au fluide concentré.

# Fig. 1

# Fig. 2

## Fig. 3

# Fig. 4

# Fig. 5

# Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56087405 A
- JP 60037029 A
- JP 10296058 A
- US 4781830 A
- JP 2021919 A
- US 4016078 A
- WO 9608306 A